# EUROPÄISCHE PATENTSCHRIFT

(11) **EP 1 173 808 B1**
(45) Veröffentlichungstag und Bekanntmachung des Hinweises auf die Patenterteilung: **25.06.2003**
(21) Anmeldenummer: 00920667.3
(22) Anmeldetag: 05.04.2000
(51) Int. Cl.: G06F 9/44, G05B 13/02

(54) **SOFTWAREOBJEKT, SYSTEM UND VERFAHREN FÜR EIN AUTOMATISIERUNGSPROGRAMM MIT FUNKTIONSREGELN MIT MEHRFACHNUTZUNG FÜR VERSCHIEDENE PROGRAMMIERWERKZEUGE**
SOFTWARE OBJECT, SYSTEM AND METHOD FOR AN AUTOMATION PROGRAMME WITH FUNCTION RULES WHICH HAS MULTIPLE USES FOR VARIOUS PROGRAMMING TOOLS
LOGICIEL, SYSTEME ET PROCEDE POUR PROGRAMME D'AUTOMATISATION A REGLES DE FONCTIONNEMENT DESTINE A L'UTILISATION MULTIPLE DE DIFFERENTS OUTILS DE PROGRAMMATION

(30) Priorität: 06.04.1999 EP 99106819
(43) Veröffentlichungstag der Anmeldung: 23.01.2002
(73) Patentinhaber: SIEMENS AKTIENGESELLSCHAFT, 80333 München (DE)
(72) Erfinder: HAARDÖRFER, Jürgen, D-90574 Rosstal (DE); JACHMANN, Thomas, D-90475 Nürnberg (DE); WINTER, Ulrich, D-91790 Burgsalach (DE)
(86) Internationale Anmeldenummer: EP0003046
(87) Internationale Veröffentlichungsnummer: WO00060459

(56) Entgegenhaltungen:
- EP-A- 0 367 544
- BALZER D ET AL.: "WISSENSGESTÜTZTE PROZESSFÜHRUNG. \TEIL 1: ENTWICKLUNG UND WEITERENTWICKLUNG DER EXPERTENSYSTEM-SHELL PROCON" AUTOMATISIERUNGSTECHNISCHE PRAXIS - ATP, Bd. 34, Nr. 1, 1. Januar 1992 (1992-01-01), Seiten 36-43, XP000258318 München, DE ISSN: 0178-2320
- BALZER D ET AL.: "WISSENSGESTÜTZTE PROZESSFÜHRUNG. \TEIL 2: ANWENDUNGEN ZUR PROZESSSICHERUNG" AUTOMATISIERUNGSTECHNISCHE PRAXIS - ATP, Bd. 34, Nr. 2, 1. Februar 1992 (1992-02-01), Seiten 85-92, XP000258313 München, DE ISSN: 0178-2320
- LIBERT G: "INDEX: AN EXPERT SYSTEM SHELL FOR THE REAL-TIME COMMAND OF INDUSTRIAL PROCESSES" JOURNAL A, Bd. 30, Nr. 4, 1. Dezember 1989 (1989-12-01), Seiten 37-46, XP000087250 ISSN: 0771-1107

## Beschreibung

Die Erfindung betrifft ein System und ein Verfahren zur Erstellung, Steuerung und/oder Überwachung eines technischen Prozesses mit mindestens einem Softwareobjekt.

Ein derartiges System und Verfahren kommt insbesondere im Zusammenhang mit einem Automatisierungssystem zur Steuerung und/oder Überwachung eines technischen Prozesses zur Anwendung. Dabei wird beispielsweise festgelegt, wie Messgrößen des Prozesses auf Stellgrößen des Prozesses einwirken. Für die Erstellung, Bearbeitung, Analyse und Anzeige eines derartigen Automatisierungsprogramms kommen Programmierwerkzeuge zum Einsatz, die auf einer Datenverarbeitungsvorrichtung ablauffähig sind und in der Lage sind, das Automatisierungsprogramm, bzw. einen Teil eines Automatisierungsprogramms graphisch anzuzeigen. Hierzu sind verschiedene Darstellungsarten für das Automatisierungsprogramm möglich, beispielsweise Struktogramme, Zustandsautomaten, Stromlaufpläne, Funktionspläne etc. Manche Automatisierungsprogramme sind in der Lage, auf verschiedene Arten dargestellt zu werden, beispielsweise als Struktogramm oder als Programm-Ablaufplan, als Stromlaufplan oder als Funktionsplan.

Der Fachartikel Balzer, D. et al: "Wissensgestützte Prozessführung, Teil 1: Entwicklung und Weiterentwicklung der Expertensystem-Shell PROCON", Automatisierungstechnische Praxis -ATP, Bd. 34, Nr. 1, 1. Januar 1992, Seiten 36-43, XP000258318, München, DE ISSN: 0178-2320, beschreibt die Expertensystem-Shell PROCON für Entwicklung und Einsatz wissensbasierter Beratungssysteme zur Unterstützung des Betriebspersonals in komplexen Entscheidungssituationen der Prozessführung. Der Problemraum wird objektorientiert strukturiert. Die arbeitsteilige Entwicklung und langfristige Wartung praxisrelevanter Wissensbasen wird durch eine problemnahe Entwicklungsumgebung mit natürlichsprachigem und graphischem Interface unterstützt.

Im Fachartikel Balzer, D. et al: "Wissensgestützte Prozessführung, Teil 2: Anwendungen zur Prozesssicherung", Automatisierungstechnische Praxis - ATP, Bd. 34, Nr. 2, 1. Februar 1992, Seiten 85-92, XP000258313, München, DE ISSN: 0178-2320, wird die Einbindung der oben genannten Expertensystem-Shell PROCON in die Prozessleittechnik und ihre Anwendung zur wissensbasierten Prozesssicherung in einer Chemiefaseranlage beschrieben.

Aus der EP 0 367 544 ist ein Verfahren zur Erstellung eines Bedien- und Beobachtungssystems für Labor- und Prozessanwendungen bekannt bei welchem mittels einem natürlichsprachigen und graphischen Interface Komponenten des wissensbasierten Systems spezifiziert werden.

Der Erfindung liegt die Aufgabe zugrunde, ein System und ein Verfahren zur Abbildung von Funktionsregeln für ein Automatisierungsprogramm anzugeben, das für verschiedene Programmierwerkzeuge möglichst universell einsetzbar ist.

Diese Aufgabe wird durch ein System sowie ein Verfahren mit den in den Ansprüchen 1 bzw. 4 angegebenen Merkmalen gelöst.

Der Erfindung liegt die Erkenntnis zugrunde, dass für die Erstellung und Bearbeitung von Funktionsregeln für Automatisierungsprogramme bisher eine Vielzahl verschiedener Datenstrukturen verarbeitet werden mussten, was bei einer Konvertierung der Datenstrukturen die Anwendung eines Compilers oder Rückübersetzers erforderlich macht. Ein derartiger Umgang mit mehreren Datenstrukturen stellt somit einen erhöhten Aufwand dar. Durch die Ausbildung der Funktionsregeln als boole'sche Ausdrücke steht dem Automatisierungsprogramm und gegebenenfalls den für das Automatisierungsprogramm vorgesehenen Programmierwerkzeugen ein gemeinsames einheitliches Datenformat für Bedingungen zur Verfügung, das aus einer einfachen Zeichenkette besteht und somit programmiersprachen- und plattformunabhängig einsetzbar ist. Durch dieses gemeinsame Datenformat lassen sich weitere Darstellungsarten realisieren, die auf diesem Format arbeiten. Auch in bereits existierende Systeme lassen sich derartige Darstellungsarten mit geringem Aufwand einbinden. Durch die Verwendung von Zeichenketten besteht zudem die Möglichkeit, das Datenformat zu erweitern und dadurch neue Sprachkonstrukte zu unterstützen.

Eine einfache und sichere Identifikation einzelner Elemente eines boole'schen Ausdrucks, beispielsweise Operanden, wird dadurch ermöglicht, daß einzelne Elemente des boole'schen Ausdrucks Attribute erhalten, welche zur Unterscheidung von Elementen des boole'schen Ausdrucks dienen. Außer zur Identifikation können auch Attribute für andere Zwecke definiert werden, z.B.: Erstellungsdatum, Benutzerkennungen, Zustände, ...

Im folgenden wird die Erfindung anhand der in den Figuren dargestellten Ausführungsbeispiele näher beschrieben und erläutert.

Es zeigen:
- FIG 1: ein Blockschaltbild zum Grundaufbau einer Softwarekomponente und zur Einbettung eines Softwareobjekts in ein Automatisierungsprogremm sowie in verschiedene Programmierwerkzeuge,
- FIG 2: eine schematische Darstellung zum Grundaufbau einer aus boole'schen Ausdrücken aufgebauten Funktionsregel,
- FIG 3: eine beispielhafte Darstellung einer Oberflächenkomponente als Kontaktplan,
- FIG 4: eine beispielhafte Darstellung der in Fig. 3 dargestellten Oberflächenkomponente als Funktionsplan,
- FIG 5: eine erste beispielhafte Darstellung einer Funktionsregel der in den Fig. 3 und 4 dargestellten Oberflächenkomponenten,
- FIG 6: eine zweite beispielhafte Darstellung einer Funktionsregel der in den Fig. 3 und 4 dargestellten Oberflächenkomponenten,

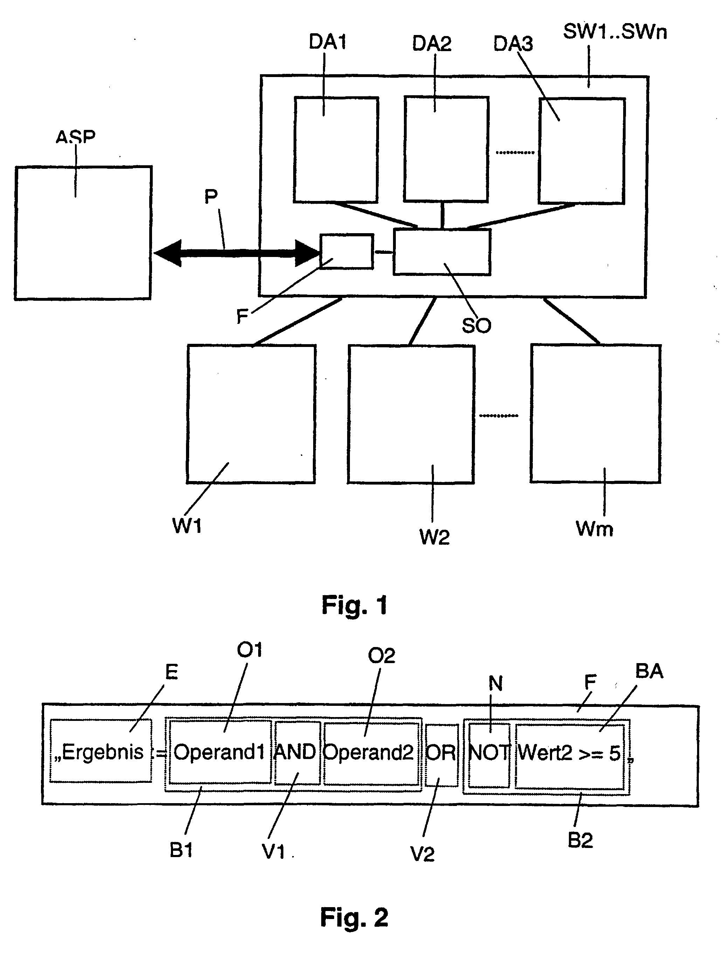

Figur 1 zeigt ein Blockschaltbild zum Grundaufbau einer Softwarekomponente SW und zu deren Einbettung in verschiedene Programmierwerkzeuge W1..Wm. Die Softwarekomponente SW steht als Repräsentant für den Grundaufbau einer Vielzahl von Softwarekomponenten SW1..SWn. Die Softwarekomponente SW enthält ein zentrales Softwareobjekt SO, das die der Softwarekomponente SW zugeordneten Funktionsregeln verwaltet. Dem Softwareobjekt SO sind die Darstellungsarten DA1..DAm zugeordnet. Die Darstellungsarten DA1..DAm dienen der graphischen Darstellung der Funktionsregeln F innerhalb der Softwarekomponente SW in den verschiedenen Programmierwerkzeugen W1..Wz. Ein Programmierwerkzeug unterstützt dabei in der Regel mehrere Darstellungsarten. Das Softwareobjekt SO kapselt somit alle darstellungsspezifischen Eigenschaften der Funktionsregeln (also einem Bestandteil eines Automatisierungsprogramms ASP), was mit Hilfe eines Pfeiles P zwischen dem Automatisierungsprogramm ASP und den Funktionsregeln F veranschaulicht ist.

Figur 2 zeigt eine schematische Darstellung zum Grundaufbau einer aus boole'schen Ausdrücken aufgebauten Funktionsregel F. Die Funktionsregel F definiert ein Ergebnis E als Verknüpfung zweier boole'scher Ausdrücke B1, B2. Der erste boole'sche Ausdruck B1 besteht aus einem ersten Operanden O1 aus einer ersten Verknüpfung V1 sowie aus einem zweiten Operanden O2. Der zweite boole'sche Ausdruck B2 besteht aus einer Negierung N sowie aus einer Bedingungsangabe BA der Form "Wert 2 >= 5". Der erste boole'sche Ausdruck B1 und der zweite boole'sche Ausdruck B2 sind über eine zweite Verknüpfung V2, einem "OR" miteinander verknüpft.

Wie aus Figur 2 ersichtlich, enthält die Funktionsregel F ein einheitliches gemeinsames Format in Form von boole'schen Ausdrücken B1, B2. Die so gebildete Zeichenkette kann in beliebigen Darstellungsarten DAi (vergleiche Figur 1) benutzt werden.

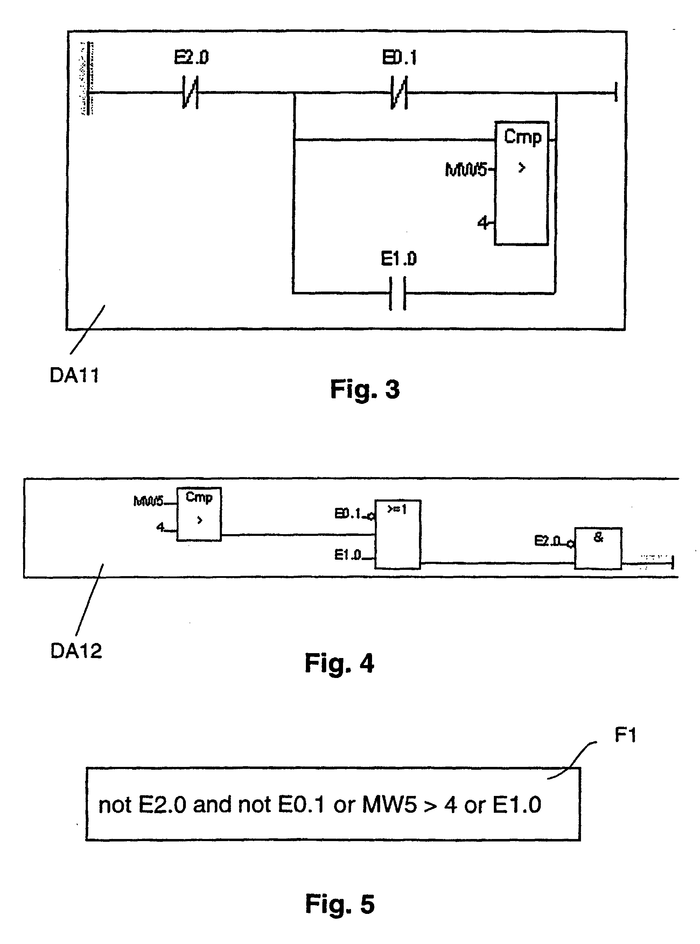

Figur 3 zeigt eine beispielhafte Darstellung DA11 als Kontaktplan, wie er beispielsweise im Zusammenhang mit einem Automatisierungsprogramm (vergleiche Figur 1) zum Einsatz kommt. Der Darstellung DA11 ist eine Funktionsregel zugeordnet, wie sie in Figur 5 in boole'scher Form dagestellt ist.

Figur 4 zeigt eine beispielhafte Darstellung DA12 als Funktionsplan. Der Darstellung DA12 liegt dabei wiederum die in Figur 5 als boole'scher Ausdruck gezeigte Funktionsregel zugrunde.

Figur 5 zeigt eine erste beispielhafte Darstellung einer Funktionsregel F1 für die Darstellungen in den Figuren 3 und 4. Die Funktionsregel F1 besteht, wie bereits im Zusammenhang mit Figur 2 prinzipiell erläutert wurde, aus einem einheitlichen gemeinsamen Datenformat, welches aus boole'schen Ausdrücken zusammengesetzt ist. Ein derartiges Datenformat ist unabhängig von der verwendeten Darstellungsart und somit programmiersprachen- und plattformunabhängig verwendbar.

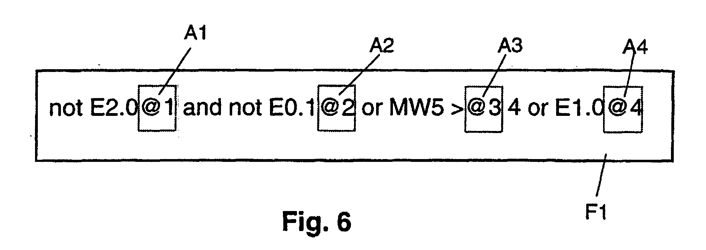

Figur 6 zeigt eine zweite beispielhafte Darstellung einer Funktionsregel F1 für die Darstellungen in den Figuren 3 und 4. Der Aufbau der Funktionsregel F1 entspricht dabei im wesentlichen dem Aufbau der Funktionsregel von Figur 5. Im Unterschied hierzu sind den Bestandteilen der Funktionsregel F1 zur Identifikation der Bestandteile jeweils Attribute A1..A4 zugeordnet. Die Attribute A1..A4 bestehen bei den in Figur 6 dargestellten Ausführungsbeispiel aus der Zuordnung der Zeichen @1, @2, @3, @4. Hierdurch wird es möglich, mehrfach vorkommende Operanden voneinander zu unterscheiden.

Im folgenden sollen zusammenfassend nochmals die Vorteile der Erfindung aufgelistet werden:
- Durch die Zeichenkettendarstellung kann ein einfacher Datenaustausch z.B. zum Zweck der Persistenz, Clipboard, ... erfolgen
- Die Verwendung einer Zeichenkette erlaubt einen programmiersprachen- und plattformunabhängigen Zugriff auf die Daten
- Es lassen sich weitere Darstellungsarten realisieren, die
   - ... auf diesem Format arbeiten
   - ... sich mit relativ geringem Aufwand in ein bereits existierendes System einbinden lassen
   - ... bereits existierende Daten interpretieren können
- Durch die Verwendung von Zeichenketten besteht die Möglichkeit, das Datenformat zu erweitern und dadurch neue Sprachkonstrukte zu unterstützen
- Durch das Konzept der Attributierung von Bestandteilen der Bedingung lassen sich Zusatzinformationen speichern, die eine Integration weiterer Konzepte erlauben
   - z.B. kann ein Attribut zur Identifizierung von Bestandteilen der Bedingung eingeführt werden, wodurch beispielsweise festgelegt werden kann, welches Element selektiert sein soll oder über die ein Statuswert zur Visualisierung zugeordnet werden kann.

Es erfolgt eine Abstraktion von den konkreten Darstellungsarten hin zu einem tragfähigen, erweiterbaren, gemeinsamen Datenformat. Durch die Attributierung von boole'schen Ausdrücken besteht die Möglichkeit zur Hinterlegung weiterer Informationen.

Im folgenden werden mögliche Realisierungen der boole'schen Verknüpfungen gezeigt:
- Darstellung der boole'schen Zeichenkette mit Hilfe von AND, OR, NOT, ...
   z.B. Ergebnis = A AND B OR NOT C
- Darstellung der boole'schen Zeichenkette mit Hilfe von +, *, !, ...
   z.B. Ergebnis = a * b + !c
- Darstellung der boole'schen Zeichenkette mit Hilfe von &, |, !, ...
   z.B. Ergebnis = a & b | !c
- Darstellung der boole'schen Zeichenkette mit Hilfe von XML-Tags

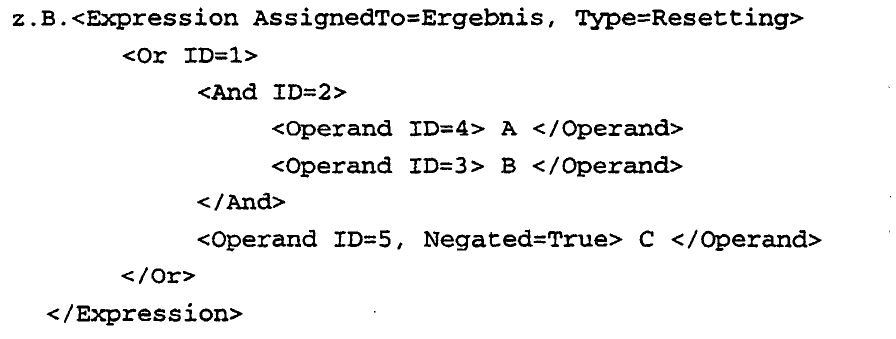

Zusammenfassend betrifft die Erfindung somit ein Softwareobjekt, ein System und ein Verfahren zur Abbildung von Funktionsregeln für ein Automatisierungsprogramm mit Mehrfachnutzung für verschiedene Programmierwerkzeuge. Zur Erzielung eines gemeinsamen Datenformats wird vorgeschlagen, ein aus Zeichenketten bestehendes Datenformat zu verwenden, das einen boole'schen Ausdruck enthält, wobei der boole'sche Ausdruck mindestens einem Ergebnis als Funktionsregel zugewiesen werden kann.

## Patentansprüche

1. System zur Erstellung, Steuerung und/oder Überwachung eines technischen Prozesses, mit
- einem Automatisierungsprogramm (ASP) mit Funktionsregeln (F) zur Definition von Ergebnissen (E),
- mit einer Softwarekomponente (SW), die ein Softwareobjekt (SO) zur Verwaltung und Bearbeitung von der Softwarekomponente (SW) zugeordneten Funktionsregeln (F) enthält,
**dadurch gekennzeichnet,**
**dass** Programmierwerkzeuge (W1..Wz) zur graphischen Darstellung der Funktionsregeln (F) in dem Softwareobjekt (SO) zugeordneten Darstellungsarten (DA1..Dam) vorgesehen sind,
wobei die Funktionsregeln (F) ein aus einer programmiersprachen- und plattformunabhängig einsetzbaren Zeichenkette bestehendes gemeinsames Datenformat aufweisen, das mindestens einen boole'schen Ausdruck (B) enthält, der mindestens einem Ergebnis (E) zugeordnet ist.

2. System nach Anspruch 1,
**dadurch gekennzeichnet,**
**dass** Elemente des boole'schen Ausdrucks (B) erste Attribute zur Identifikation und Unterscheidung der Elemente aufweisen.

3. System nach Anspruch 1 oder 2,
**dadurch gekennzeichnet,**
**dass** Elemente des boole'schen Ausdrucks (B) zweite Attribute zur Speicherung von Zusatzinformationen aufweisen.

4. Verfahren zur Erstellung, Steuerung und/oder Überwachung eines technischen Prozesses, bei welchem Verfahren
- mit Funktionsregeln (F) eines Automatisierungsprogramms (ASP) Ergebnisse (E) definiert werden,
- ein Softwareobjekt (SO) einer Softwarekomponente (SW) der Softwarekomponente (SW) zugeordnete Funktionsregeln (F) verwaltet und bearbeitet,
- Programmierwerkzeuge (W1..Wz) die Funktionsregeln (F) in dem Softwareobjekt (SO) zugeordneten Darstellungsarten (DA1..Dam) graphisch darstellen,
wobei die Funktionsregeln (F) ein aus einer Programmiersprachen- und plattformunabhängig einsetzbaren Zeichenkette bestehendes gemeinsames Datenformat aufweisen, das mindestens einen boole'schen Ausdruck (B) enthält, der mindestens einem Ergebnis (E) zugeordnet ist.

5. Verfahren nach Anspruch 4,
**dadurch gekennzeichnet,**
**dass** Elemente des boole'schen Ausdrucks (B) mittels den Elementen zugeordneter erster Attribute identifizierbar und unterscheidbar sind.

6. Verfahren nach Anspruch 4 oder 5,
**dadurch gekennzeichnet,**
**dass** Zusatzinformationen in den Elementen des boole'schen Ausdrucks (B) zugeordneten zweiten Attributen speicherbar sind.

## Claims

1. System for creating, controlling and/or monitoring a technical process, with
- an automation program (ASP) with function rules (F) for definition of results (E),
- with a software component (SW) which contains a software object (SO) for managing and processing function rules assigned to the software component (SW),
**characterised in that**
programming tools (W1..Wz) for graphic display of the function rules (F) in presentation modes (DA1..Dam) assigned to the software object (SO) are provided, the function rules (F) having a common data format comprising a character string which can be used independently of programming language and platform, said data format containing at least one Boolean expression (B) assigned to at least one result (E).

2. System according to Claim 1, **characterised in that** elements of the Boolean expression (B) have first attributes for identification and differentiation of the elements.

3. System according to Claim 1 or 2, **characterised in that** elements of the Boolean expression (B) have second attributes for storing additional information.

4. Method for creating, controlling and/or monitoring a technical process, in which method
- function rules (F) of an automation program (ASP) are used to define results (E),
- a software object (SO) of a software component (SW) manages and processes function rules assigned to the software component (SW),
- programming tools (W1..Wz) graphically display the function rules (F) in presentation modes (DA1..Dam) assigned to the software object (SO,
the function rules (F) having a common data format comprising a character string which can be used independently of programming language and platform, said data format containing at least one Boolean expression (B) assigned to at least one result (E).

5. Method according to Claim 4, **characterised in that** elements of the Boolean expression (B) can be identified and differentiated by means of first attributes assigned to the elements.

6. Method according to Claim 4 or 5, **characterised in that** additional information can be stored in second attributes assigned to the elements of the Boolean expression (B).

## Revendications

1. Système pour la création, la commande et/ou la surveillance d'un processus technique, comportant
- un programme d'automatisation (ASP) avec des règles de fonctionnement (F) pour la définition de résultats (E),
- un composant logiciel (SW) qui contient un objet logiciel (SO) pour la gestion et le traitement de règles de fonctionnement (F) associées au composant logiciel (SW),
**caractérisé par le fait qu'**il est prévu des outils de programmation (W1 à Wz) pour la représentation graphique des règles de fonctionnement (F) dans des types de représentation (DA1 à DAm) associés à l'objet logiciel (SO), les règles de fonctionnement (F) comportant un format de données commun qui est constitué d'une chaîne de caractères utilisable indépendamment du langage de programmation et du support et qui contient au moins une expression booléenne (B) qui est associée à au moins un résultat (E).

2. Système selon la revendication 1,
**caractérisé par le fait que** des éléments de l'expression booléenne (B) comportent des premiers attributs pour l'identification et la distinction des éléments.

3. Système selon la revendication 1 ou 2,
**caractérisé par le fait que** des éléments de l'expression booléenne (B) comportent des deuxièmes attributs pour la mémorisation d'informations supplémentaires.

4. Procédé pour la création, la commande et/ou la surveillance d'un processus technique, dans lequel
- on définit des résultats (E) avec des règles de fonctionnement (F) d'un programme d'automatisation (ASP),
- un objet logiciel (SO) d'un composant logiciel (SW) gère et traite des règles de fonctionnement (F) associées au composant logiciel (SW),
- des outils de programmation (W1 à Wz) représentent graphiquement les règles de fonctionnement (F) dans des types de représentation (DA1 à DAm) associés-à l'objet logiciel (SO),
les règles de fonctionnement (F) comportant un format de données commun qui est constitué d'une chaîne de caractères utilisable indépendamment du langage de programmation et du support et qui contient au moins une expression booléenne (B) qui est associée à au moins un résultat (E).

5. Procédé selon la revendication 4,
**caractérisé par le fait que** des éléments de l'expression booléenne (B) peuvent être identifiés et distingués au moyen de premiers attributs associés aux éléments.

6. Procédé selon la revendication 4 ou 5,
**caractérisé par le fait que** des informations supplémentaires peuvent être mémorisées dans des deuxièmes attributs associés aux éléments de l'expression booléenne (B).
